# EUROPÄISCHE PATENTSCHRIFT

(11) **EP 2 400 165 B1**
(45) Veröffentlichungstag und Bekanntmachung des Hinweises auf die Patenterteilung: **25.07.2018**
(21) Anmeldenummer: 11004846.9
(22) Anmeldetag: 14.06.2011
(51) Int. Cl.: F15B 11/024

(54) **Pneumatischer Stellantrieb und Verfahren zum Betreiben des pneumatischen Stellantriebs**
Method for operating a pneumatic actuating drive and pneumatic actuating drive
Entraînement de réglage pneumatique et procédé de fonctionnement de l'entraînement de réglage pneumatique

(30) Priorität: 23.06.2010 DE 102010024723
(43) Veröffentlichungstag der Anmeldung: 28.12.2011
(73) Patentinhaber: Samson Aktiengesellschaft, 60314 Frankfurt (DE)
(72) Erfinder: Karte, Thomas, 63486 Bruchköbel (DE)
(74) Vertreter: Schmid, Nils T.F.

(56) Entgegenhaltungen:
- DE-A1-102006 041 707
- DE-U1-202007 017 130

## Beschreibung

Die Erfindung betrifft einen pneumatischen Stellantrieb zum Stellen einer Stellarmatur, wie eines Stellventils, eines Feldgeräts einer prozesstechnischen Anlage.

Ein bekannter pneumatischer Stellantrieb hat eine pneumatisch beaufschlagbare Arbeitskammer, die an eine pneumatische Druckquelle insbesondere über einen Stellungsregler mit integriertem Magnetventil angeschlossen ist. Zum Verlagern des Stellventils wird die pneumatische Arbeitskammer durch den Stellungsregler mit einem pneumatischen Über- oder Unterdruck beaufschlagt, welcher einen an einer Membran getragenen Stellteller, an dem stellkraftübertragend das Stellventil befestigt ist, in die gewünschte ausgeregelte Position verlagert. Dabei beaufschlagt der Stellungsregler die pneumatische Arbeitskammer mit einem durch eine Regelungsroutine eingestellten, pneumatischen Soll- oder Steuerdrucksignal. Um das Stellventil anschließend wieder in die Ausgangsposition zurückzuverlagern, können Rückstellkräfte, die beispielsweise in einer zweiten Arbeitskammer, insbesondere einer Rückstellkammer, beispielsweise durch ein mechanisches Mittel, wie eine Druckfeder, oder durch eine Gegenpneumatik hervorgerufen werden, an dem Stellteller angreifen.

Insbesondere bei einem als sogenanntes Sicherheitsventil ausgebildeten Stellventil soll eine festgelegte Zwangsposition beispielsweise bei einer allgemeinen Betriebsstörung der prozesstechnischen Anlage automatisch eingenommen werden. Dies kann dadurch erreicht werden, dass eine vorgespannte Druckspiral- oder Schraubendruckfeder innerhalb der Rückstellkammer den Stellteller und damit das Stellventil in die Zwangs- oder Notposition dann drängt, wenn die pneumatische Arbeitskammer entlüftet wird.

Beim Regeln der Position des Stellventils errechnet ein Stellungsregler anhand einer Ist-Position und Regelungsvorgaben einer Leitwarte ein elektrisches Positions-Sollsignal, das ein I/P-Wandler des Stellungsreglers in ein pneumatisches Solldrucksignal umwandelt, mit dem dann die Arbeitskammer pneumatisch beaufschlagt wird.

Es kann bei vielen Einsatzgebieten vorkommen, dass ein pneumatischer Stellantrieb einen längeren Zeitraum über unbetätigt bleibt und das Stellventil während dieses langen Zeitraums stets in derselben Position, beispielsweise in einer vollständig geöffneten oder vollständig geschlossenen Position, verharrt und/oder einen kritischen Verschleißzustand erfährt. Zu einer Stellbewegung des Stellventils kommt es im Allgemeinen dann, wenn ein erhöhter Soll-Druck innerhalb einer Arbeitskammer erzeugt wird. Es kann das Phänomen eines anfänglichen Verharrens des Stellventils just zu Beginn der Stellbewegung und eines wegen des anfänglichen Verharrens anschließenden Überschwingens des Stellventils über die gewünschte Sollposition hinaus auftreten, was als Stick-Slip-Effekt bekannt ist. Um eine anfängliche Haftreibung, die bei wenig betätigten Stellantrieben besonders hoch sein kann, zu überwinden, ist ein entsprechend hoher Druck in der pneumatischen Arbeitskammer zu erzeugen.

Im Falle eines doppelt-wirkenden Antriebs ist eine Druckdifferenz zwischen einer ersten und zweiten Arbeitskammer (Hauptarbeitskammer und Rückstellkammer) entsprechend groß einzustellen, um die anfängliche Haftreibung zu überwinden. Sobald der pneumatische Antrieb das Stellventil aus der Ruhelage verfährt, zwingt die hohe Druckdifferenz den Antrieb zu einem sprunghaften Ausbrechen aus der Ruhelage, was regelungstechnisch schwer kontrollierbar ist. Die Pneumatik/Mechanik des doppelt-wirkenden Stellantriebs ist dann derart träge, dass das Stellglied die Sollposition überfährt. In vielen Betriebssituationen ist eine kleine Positionsänderung gewünscht, welche aufgrund des Stick-Slip-Effekts aus der Ruhelage erst durch wenigstens eine Nachregelung erreicht werden kann, die ein allmähliches Einpendeln des Stellventils um die Sollposition veranlasst. Ein Positionssensor kann das Überschwingen erkennen, und der Stellungsregler wirkt dem entgegen, indem die pneumatische Druckdifferenz an dem Stellteller durch Druckabbau in der Arbeitskammer reduziert wird. Beim doppelt-wirkenden Stellantrieb kann das Zurückverlagern des Stellventils dadurch erreicht werden, dass der Rückstellkammer Druckluft zugeführt wird. Die Regelungsgeschwindigkeit der pneumatischen Umladung in den jeweiligen Arbeitskammern ist durch die Luftkapazität des Stellungsreglers sowie Trägheit des Systems begrenzt.

Eine Ansteuervorrichtung für einen Pneumatikantrieb ist in DE 20 2007 017130 U1 offenbart. Ein Verfahren zum Betrieb einer Kolbenzylindereinheit ist aus DE 10 2006 041707 A1 bekannt.

Es ist Aufgabe der Erfindung, die Nachteile des Stands der Technik zu überwinden, insbesondere die Regelungsreaktivität des gattungsgemäßen pneumatischen Stellantriebs insbesondere bei hoher Haft- und geringer Gleitreibung zu verbessern.

Diese Aufgabe wird durch die Merkmale von Anspruch 1 gelöst. Danach ist ein pneumatischer Antrieb zum Stellen einer Stellarmatur, insbesondere eines Stellventils, mit einer ersten Arbeitskammer, wie einer Hauptarbeitskammer, und einer zweiten Arbeitskammer, wie einer Rückstellkammer, vorgesehen. Dabei kann es sich um einen translatorischen Stellantrieb oder einen Schwenkantrieb handeln. Der pneumatische Stellantrieb kann durch Verlagern eines Ventilglieds einen Ventilsitz (auch) teilweise öffnen oder schließen, um einen prozesstechnischen Fluidstrom durch den Ventilsitz hindurch anlagenbetriebsgemäß zu regeln. Die erste und die zweite Arbeitskammer sind durch eine bewegliche Trennwand, insbesondere Membranwand, voneinander pneumatisch getrennt. Die Stellarmatur ist an der beweglichen Trennwand stellkraftübertragend gekoppelt, so dass bei einer Verlagerung der Trennwand die regelungsgemäße Verlagerung der Stellarmatur einhergeht. Bei einer Druckdifferenz in den Arbeitskammern wird die Trennwand in einer Stellrichtung verlagert, je nachdem in welchen der beiden Kammern der Stelldruck höher ist, hin zur Kammer niedrigeren Drucks. Dabei kann eine erste Stellrichtung dadurch realisiert werden, dass in der ersten Arbeitskammer ein höherer Stelldruck herrscht als in der zweiten Arbeitskammer, wobei in die zweite Stellrichtung dann verlagert wird, wenn der Stelldruck in der zweiten Arbeitskammer höher als der in der ersten Arbeitskammer ist.

Vorzugsweise sind die Stellarmatur und/oder die Trennwand derart beweglich gelagert, dass eine Verlagerung ausschließlich in der ersten und entgegengesetzten zweiten Stellrichtung ermöglicht ist. Der pneumatische Antrieb hat einen Stellungsregler, der zum Aufbau der Druckdifferenz zwischen den beiden Arbeitskammern zumindest wenigstens ein pneumatisches Stellsignal an die erste Arbeitskammer und gegebenenfalls eine zweite Arbeitskammer abgeben kann. Hierzu kann der Stellungsregler ein Magnetventil aufweisen, das elektrisch regelungsgemäß angesteuert ist, wobei der Stellungsregler an eine pneumatische Druckquelle insbesondere konstanten Versorgungsdrucks angeschlossen sein kann. Bei dem erfindungsgemäßen pneumatischen Stellantrieb sind die erste und die zweite Arbeitskammer durch eine pneumatische Kurzschlussleitung miteinander pneumatisch verbunden. In der Kurzschlussleitung ist ein Ausgleichsventil zum Schließen und/oder Öffnen der Kurzschlussleitung angeordnet. Das Ausgleichsventil kann elektrisch gestellt werden und wird derart durch den Stellungsregler angesteuert, dass im Falle einer bestimmten, insbesondere unter anderem durch einen Positionssensor erfassten Betriebssituation, wie eines Stick-Slip-Zustands der Stellarmatur oder einer Überschreitung einer vorbestimmten pneumatischen Ist-Druck-Differenz zwischen der ersten und der zweiten Arbeitskammer, das Ausgleichsventil die erste und die zweite Arbeitskammer für einen Arbeitskammerdruckausgleich zwischen den Arbeitskammern pneumatisch kurzschließen kann. Mit der erfindungsgemäßen Maßnahme des Vorsehens einer die beiden Arbeitskammern unmittelbar koppelnden Kurzschlussleitung, welche mittels eines Ausgleichsventils geöffnet und geschlossen werden kann, ist es möglich, ein Überschwingen der Stellarmatur in Folge eines Stick-Slip-Effekts einfach und effektiv zu kompensieren, sogar vollständig zu vermeiden.

Der Stick-Slip-Effekt kann in vielerlei Weise detektiert werden, beispielsweise durch den Positionssensor, der eine sprunghafte Fahrbewegung der Stellarmatur erfassen kann, und/oder durch einen pneumatischen Drucksensor, der unzulässige Druckspitzen in einer Arbeitskammern ermitteln kann. Wird ein derartiger Überdruck in einer der Arbeitskammern erfasst, wird dieser nicht lediglich dadurch abgebaut, dass die Arbeitskammer erhöhten Stelldrucks entlüftet wird. Vielmehr wird die eine entgegengesetzte Bewegung bewirkende (zweite) Arbeitskammer niedrigen Drucks ebenfalls mit dem Stelldruck beaufschlagt, wodurch es zu einem unmittelbaren Druckdifferenz-Ausgleich kommt, wodurch einem trägheitsbedingten Überschwingen des pneumatischen Systems Einhalt geboten wird.

Durch das einstellbare Ausgleichsventil in der Kurzschlussleitung kann eine zu große Druck-differenz zwischen den Arbeitskammern abgebaut werden, indem die Kurzschlussleitung geöffnet wird. Die Geschwindigkeit sowie der Umfang des Abbaus der Druckdifferenz können durch entsprechendes Stellen des Ausgleichventils wunschgemäß eingestellt werden. Der Drucküberschuss in der Hauptarbeitskammer wird direkt in die Rückstellkammer geleitet, um dort einen Bremsgegendruck aufzubauen. Auf diese Weise wird neben einem deutlich beschleunigten Druckaufbau und -abbau auch ein präziseres und reaktiveres Regelverhalten des Stellungsregelungssystems erzielt. Zudem wird eine verbesserte Energieverbrauchsbilanz erreicht, da insbesondere weniger Druckluft ungenutzt an die Atmosphäre abgegeben wird.

Im Übrigen sei klar, dass, vorzugsweise nachdem die Kurzschlussleitung durch das Ausgleichsventil geöffnet ist, dieses auch unmittelbar darauf auch wieder geschlossen werden sollte, um die eigentlich einzustellende Solldruckdifferenz zwischen den Arbeitskammern wieder aufzubauen, welche notwendig ist, um die regelungsgemäße Sollposition zu erreichen. Der erfindungsgemäße Druckausgleich mittels Öffnung einer Kurzschlussleitung zwischen den Arbeitskammern und dem anschließenden Druckdifferenzaufbau stellt einen kontinuierlichen Prozess dar, bei dem der Wiederaufbau der Soll-Druckdifferenz noch während der Bewegung der Stellarmatur zu beginnen ist und ein erneutes Verharren in einer Position zu vermeiden ist.

Bei einer bevorzugten Ausführung der Erfindung ist das Ausgleichsventil durch ein Zwei/Zwei-Wegeventil und/oder durch wenigstens ein Magnetventil gebildet. Das Ausgleichsventil oder das Magnetventil ist mit dem Stellungsregler über eine elektrische Leitung verbunden, um elektrische Steuersignale zu empfangen.

Bei einer bevorzugten Ausführung der Erfindung ist die zweite Arbeitskammer ebenfalls mit einem pneumatischen Stellsignal von dem Stellungsregler beaufschlagbar. Damit ist ein sogenannter doppelt-wirkender Stellantrieb realisiert. Das Ausgleichsventil ist in einem Leitungsabschnitt angeordnet, der zwei pneumatische Kopplungsleitungen miteinander pneumatisch verbindet, die den Stellungsregler mit der jeweiligen Arbeitskammer zur Übertragung des jeweiligen pneumatischen Stellsignals pneumatisch koppeln.

Bei einer Weiterbildung der Erfindung ist eine pneumatische Abluftleitung zwischen der zweiten Arbeitskammer, wie der Rückstellkammer, und einer atmosphärenseitigen Entlüftungssenke vorgesehen. In der Abluftleitung kann ein zusätzliches Schaltventil angeordnet sein, um in dessen geöffneten Zustand die zweite Arbeitskammer auf Atmosphärendruck zu verlegen, also zu entlüften. In diesem Zustand kann ein Differenzdruckaufbau zwischen den Arbeitskammern erreicht werden, indem das Ausgleichsventil zwischen der ersten und der zweiten Arbeitskammer geschlossen bleibt. Zum Druckausgleich beim Auftreten eines Stick-Slip-Effekts zwischen den Arbeitskammern kann das Schaltventil durch den Stellungsregler derartig betätigt werden, dass die Abluftverbindung zwischen der zweiten Arbeitskammer und der Entlüftungssenke geschlossen wird. Nach einem Druckausgleich zwischen den Arbeitskammern kann das Schaltventil wieder geöffnet werden, wobei das Ausgleichsventil geschlossen wird, um die Arbeitskammern pneumatisch zu trennen und die Soll-Druckdifferenz zwischen den Arbeitskammern herzustellen, die regelungsgemäß notwendig ist, um die Stellarmatur in die gewünschte Sollposition zu bringen.

Bei einer Weiterbildung der Erfindung ist das Ausgleichventil durch zwei Magnetventile gebildet. Das Magnetventilpaar ist in Reihe hintereinander in einer Abluftleitung angeordnet. Zum Entlüften beider Arbeitskammern sind beide Magnetventile zu öffnen. Zum Entlüften nur einer Arbeitskammer, wie der Rückstellkammer, ist nur dasjenige Magnetventil zu öffnen, das der Entlüftungssenke näher liegt. Die Abluftleitung verbindet eine pneumatische Entlüftungssenke, die üblicherweise auf Atmosphärendruck liegt, mit einer pneumatischen Kopplungsleitung, die den Stellungsregler mit der ersten Arbeitskammer, insbesondere der Hauptarbeitskammer, pneumatisch verbindet. Von der Abluftleitung erstreckt sich eine Abzweigungsleitung weg, die in die zweite Arbeitskammer mündet. Die Abzweigung von der Abluftleitung liegt zwischen den beiden Magnetventilen. Es ist möglich, auf einfache Weise zwischen einem Normalbetrieb, in dem ein Kurzschluss-Druckausgleich zwischen den Arbeitskammern verhindert ist, und einem Sonderbetrieb zu schalten, in dem entsprechend dem Druckabbau in der ersten Arbeitskammer ein Druckaufbau in der zweiten Arbeitskammer durch den pneumatischen Kurzschluss geschieht.

Wird der Stellungsregler beispielsweise derart angesteuert, dass das der Entlüftungssenke naheliegende Magnetventil geschlossen ist und insbesondere gleichzeitig das der Kopplungsleitung naheliegende Magnetventil geöffnet wird, ist ein Druckausgleich über die Kurzschlussleitung zwischen den Arbeitskammern realisiert. Für einen Normalbetrieb des Stellantriebs (ohne Druckausgleich) wird der Stellungsregler derart angesteuert, dass das der Entlüftungssenke naheliegende Magnetventil durch den Stellungsregler geöffnet und das der Kopplungsleitung naheliegende Magnetventil durch den Stellungsregler geschlossen ist.

Bei einer bevorzugten Ausführung der Erfindung sind die erste und die zweite Arbeitskammer von einem zylindrischen Außengehäuse begrenzt, wobei insbesondere die die beiden Arbeitskammern trennende Trennwand durch einen fluiddicht an einer Innenseite des Gehäuses hin- und her beweglich gelagerten, kolbenartigen Läufer, insbesondere durch eine Membran-Platten-Struktur, gebildet ist.

Bei einer bevorzugten Ausführung der Erfindung ist in der insbesondere auf Atmosphärendruck beispielsweise durch ein Magnetventil schaltbaren Rückstellkammer wenigstens eine Rückstellfeder, vorzugsweise mehrere Rückstellfedern, angeordnet. Die Rückstellfeder veranlasst eine Verlagerung der Trennwand in eine zur Stellrichtung, in die bei einer Überdruckbeaufschlagung der ersten Arbeitskammer die Trennwand verlagert wird, entgegen gesetzte Rückstellrichtung.

Bei einer Ausführung der Erfindung ist ein Drucksensor in wenigstens einer der Arbeitskammern, vorzugsweise in der ersten Arbeitskammer, positioniert. Der Druckssensor kann signalübertragungsgemäß mit dem Stellungsregler verbunden sein, um dem Stellungsregler ausreichende Informationen darüber geben zu können, ob ein Überdruck in einer der Arbeitskammern vorliegt.

Bei einer bevorzugten Ausführung der Erfindung werden die erste und die zweite Arbeitskammer des pneumatischen Stellantriebs nur kurzzeitig kurzgeschlossen. Dies ist insbesondere dann notwendig, wenn bei ausgeglichenem Stelldruck in den Arbeitskammern es dennoch zu einer Verlagerung der Trennwand der Arbeitskammern des pneumatischen Stellantriebs und damit der Stellarmatur kommen kann, weil beispielsweise eine Rückstellfeder ständig für das Einnehmen einer Sicherheitsposition sorgt oder Prozessströmungskräfte an der Stellarmatur wirken. Nach der kurzzeitigen Aktivierung des Kurzschlussmechanismus wird dieser wieder deaktiviert, um den notwendigen Soll-Druckunterschied in den Arbeitskammern zu etablieren, damit die gewünschte Sollposition regelungsgemäß eingenommen werden kann. Die Dauer des pneumatischen Kurzschlusses kann kleiner 1,0 Sekunden, 0,5 Sekunden, 0,2 oder 0,1 Sekunden eingestellt werden. Insbesondere ist darauf zu achten, dass die Dauer des Kurzschlussmechanismus derart begrenzt ist, dass beispielsweise nach dem Detektieren eines Stick-Slip-Effekts der Druckunterschied in den Arbeitskammern rechtzeitig aufgebaut ist, bevor die sich in Bewegung gesetzte Stellarmatur wieder in Ruhe gelangt. Insofern ist bei der Aktivierung und der Deaktivierung des Kurzschlussmechanismus auf ein dynamisches Verhalten der Stellarmatur zu achten.

Des Weiteren betrifft die Erfindung ein Verfahren zum Betreiben eines insbesondere erfindungsgemäß ausgebildeten pneumatischen Antriebs zum Stellen einer Stellarmatur, insbesondere eine Stellventils. Gemäß dem Verfahren werden die Arbeitskammern pneumatisch beaufschlagt, um eine Soll-Druckdifferenz in den beiden Arbeitskammern aufzubauen. Zum Aufbau dieser Druckdifferenz wird ein entsprechendes pneumatisches Stellsignal an die Arbeitskammer und gegebenenfalls an die zweite Arbeitskammer insbesondere durch einen Stellungsregler abgegeben, wobei das pneumatische Stellsignal in der ersten Arbeitskammer höher ist als das in der zweiten Arbeitskammer, um die Stellarmatur in eine erste Richtung zu verlagern. Erfindungsgemäß werden die erste und die zweite Arbeitskammer pneumatisch miteinander insbesondere über ein Leitungssystem verbunden. Auf diese Weise werden im Falle einer bestimmten Betriebssituation, wie dem Stick-Slip-Zustand der Stellarmatur und/oder der Überschreitung eines vorbestimmten pneumatischen Hilfs-Druckunterschieds zwischen der ersten und der zweiten Arbeitskammer, die erste und die zweite Arbeitskammer pneumatisch kurzgeschlossen, um die Drücke in den Arbeitskammern aneinander anzunähern.

Es sei klar, dass das erfindungsgemäße Verfahren entsprechend der Funktionsweise des erfindungsgemäßen Stellantriebs verfahren kann.

Bevorzugte Ausgestaltungen sind in den Unteransprüchen angegeben.

Die Erfindung betrifft auch ein Verfahren zum Betreiben eines pneumatischen Stellantriebs.

Weitere Eigenschaften, Vorteile und Merkmale der Erfindung werden durch die folgende Beschreibung einer bevorzugten Ausführung anhand der beiliegenden Zeichnungen ersichtlich, in denen zeigen:
- Figur 1: eine schematische Ansicht eines erfmdungsgemäßen pneumatisch wirkenden Stellantriebs;
- Figur 2: eine schematische Ansicht eines erfindungsgemäßen pneumatisch doppelt wirkenden Stellantriebs;
- Figur 3: ein Zeit-Hub-Diagramm, bei dem der Hubverlauf der Stellarmatur bei einem Belüftungsvorgang des pneumatischen Stellantriebs mit und ohne dem erfindungsgemäßen pneumatischen Kurzschluss dargestellt ist; und
- Figur 4: ein Zeit-Hub-Diagramm, bei dem der Hubverlauf der Stellarmatur bei einem Entlüftungsvorgang des pneumatischen Stellantriebs mit und ohne dem erfindungsgemäßen pneumatischen Kurzschluss dargestellt ist.

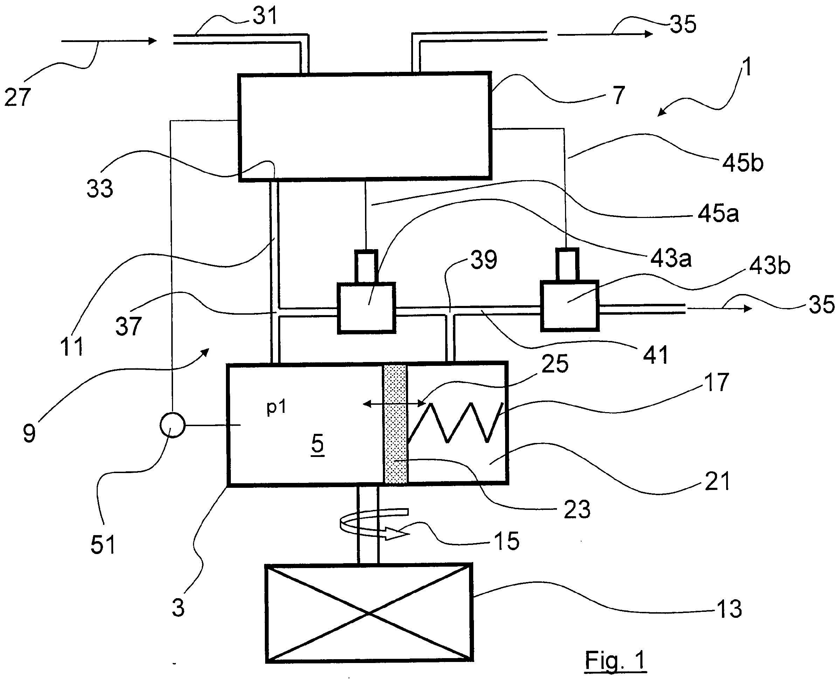

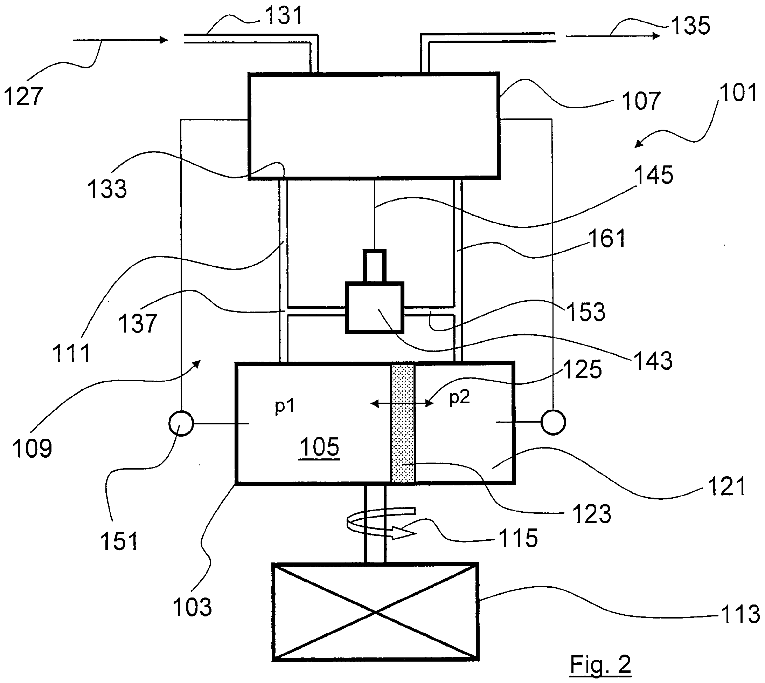

In Figur 1 ist im Allgemeinen ein einfach wirkender pneumatischer Stellantrieb mit der Bezugsziffer 1 versehen. Der pneumatische Stellantrieb 1 besteht im Wesentlichen aus drei Hauptkomponenten, nämlich einem Antriebsgehäuse 3 mit einer pneumatischen Arbeitskammer 5 und einer Rückstellkammer 21, einem Stellungsregler 7 und einem pneumatischen Leitungssystem 9 zum Übertragen von pneumatischen Stellsignalen von dem Stellungsregler 7 an den Stellantrieb 1. Eine Stellarmatur 13 wird von dem Stellantrieb 1 über eine Stellantriebswelle oder -stange betätigt. Die Stellarmatur 13 gemäß Figur 1 und 2 ist als Schwenkarmatur ausgeführt, deren Betätigungsschwenkrichtung durch den Pfeil 15 angedeutet ist.

Der Stellantrieb 1 hat in dem gezeigten Beispiel gemäß Figur 1 eine Sicherheitsfunktion, gemäß der die Stellarmatur 13 in eine vorbestimmte Betriebssituation (Notstellung) selbsttätig gedrängt wird, in der sie eine nicht dargestellte Prozessleitung einer prozesstechnischen Anlage schließt. Der Automatismus des Schließvorgangs wird durch einen mechanischen Energiespeicher realisiert, der beispielsweise als rückstellende Schrauben- oder Spiraldruckfeder 17 ausgeführt sein kann, die in dem dargestellten Beispiel in der Rückstellkammer 21 angeordnet ist und sich an einem beweglichen Stellkolben 23 und einer starren Innenwand der Rückstellkammer 21 abstützt.

Der Stellkolben 23 ist ausschließlich translatorisch hin- und her bewegbar und entsprechend an der Innenseite des Antriebsgehäuses 3 gelagert, so dass die Arbeitskammer 5 von der Rückstellkammer 21 im Bereich der Lagerfläche zwischen dem Stellkolben und der Innenseite des Antriebsgehäuses im Wesentlichen fluiddicht ist, damit ein Fluidaustausch zwischen der Arbeitskammer 5 und der Rückstellkammer 21 an dem Stellkolben und der Innenseite des Antriebsgehäuses vorbei ausgeschlossen ist.

Der als Trennwand fungierende Stellkolben 23 bewegt sich je nach Druckdifferenz in den Kammern 5, 21 translatorisch hin und her, was durch den Doppelpfeil 25 angedeutet ist. Bei einem Überdruck in der Arbeitskammer 5 bewegt sich der Stellkolben 23 nach rechts. Bei einem pneumatischen Überdruck in der Rückstellkammer 21 sowie auch bei Druckausgleich aufgrund der Schraubendruckfeder 17 bewegt sich der Stellkolben 23 nach links, wodurch die Stellarmatur geschlossen wird.

Der Stellungsregler 7 ist an eine konstante pneumatische Druckquelle von beispielsweise 6 bar angeschlossen, die in Figur 1 durch den Pfeil 27 angedeutet ist. Die pneumatische Druckquelle 27 ist über eine Eingangsleitung 31 mit dem Stellungsregler 7 verbunden. Der Stellungsregler 7 hat einen nicht näher dargestellten Mikroprozessor, der anhand eines Stellungs-Ist-Signals, das von einem nicht dargestellten Positionssensor erzeugt und übermittelt wird, auf der Basis einer internen Regelungsroutine ein Stellungs-Soll-Signal errechnen kann. Der Stellungsregler 7 hat einen pneumatischen Steuerausgang 33, der über eine pneumatische Kopplungsleitung 11 des Leitungssystems 9 mit der pneumatischen Arbeitskammer 5 verbunden ist. Im Verlauf der Kopplungsleitung 11 ist eine Leitungsabzweigung 37 vorgesehen, welche eine Entlüftungssenke (Atmosphärendruck), die durch den Pfeil 35 angedeutet ist, mit der Kopplungsleitung 11 über eine Abluftleitung 41 pneumatisch verbindet. Die Rückstellkammer 21 ist über eine weitere Leitungsabzweigung 39 an die Abluftleitung 41 gekoppelt. Die Leitungsabzweigung 37 sowie die Leitungsabzweigung 39, die in die Rückstellkammer 21 mündet, sowie der die beiden Leitungsabzweigungen 37, 39 verbindende Leitungsabschnitt bilden eine Kurzschlussleitung, in der ein Ausgleichsventil in Form eines Magnetventils 43a angeordnet ist, das den pneumatischen Kurzschluss öffnen und schließen kann.

Gemäß der Ausführung nach Figur 1 ist ein Paar Magnetventile 43a, 43b vorgesehen, welche beide beispielsweise über entsprechende elektrische Leitungen 45a, 45b durch den Stellungsregler 7 angesteuert werden. Das der Entlüftungssenke 35 nahe Magnetventil 43b kann geschlossen werden, um einen Druckabbau in der Rückstellkammer 21 hin zu der Entlüftungssenke zu verhindern. Im geöffneten Zustand des Magnetventils 43b ist die Rückstellkammer 21 stets entlüftet und liegt auf Atmosphäredruck.

Das der Kopplungsleitung 11 naheliegende Magnetventil 43a dient dazu, die Arbeitskammer und die Rückstellkammer 21 über die Kurzschlussleitungsstruktur, bestehend aus einem arbeitskammernahen Teil der Kopplungsleitung 11, einem Teil der Abluftleitung 41 und den Leitungsabzweigungen 37, 39, kurzzuschließen. Dies bedeutet, dass im geöffneten Zustand des Magnetventils 43a ein Druckausgleich zwischen der Arbeitskammer 5 und der Rückstellkammer 21 realisiert ist. Ist gleichzeitig das der Entlüftungssenke 35 zugeordnete zweite Magnetventil 43b offen, so werden beide pneumatische Arbeitskammern entlüftet, so dass die Schraubendruckfeder 17 die Stellarmatur 13 in die vorfestgelegte Notposition sicher verfahren kann.

Ist das der Kopplungsleitung nahe liegende Magnetventil 43a geschlossen, so kann ein Normalbetrieb des Stellantriebs durch Aufbau eines Soll-Stelldrucks p1 in der Arbeitskammer unternommen werden. In diesem Fall kann das der Entlüftungssenke 35 zugewandte Magnetventil 43b geöffnet sein, um die Rückstellkammer 21 auf Atmosphärendruck (1bar) zu legen.

Der Stellungsregler 7 ist signalübertragungsgemäß mit einem Drucksensor 51 verbunden, der den Stelldruck p1 in der pneumatischen Arbeitskammer 5 erfasst.

Im Falle, dass aufgrund einer hohen Haftreibung des Stellkolbens 23 an der Innenseite des Antriebsgehäuses 3 eine Verlagerung des Stellkolbens 23 bei einem ersten Druckaufbau nicht oder nicht ausreichend stattfindet, sondern erst nach einer weiteren regelungsgemäßen Stelldruckerhöhung in der Arbeitskammer 5, kann es zu einer sprunghaften Verlagerung des Stellkolbens 23 nach Überwindung der Haftreibung kommen. Beispielsweise beim Erfassen eines derartigen hohen Arbeitsdrucks P1 und eines schlagartigen Druckabbaus wird das Magnetventil 43a geöffnet, während das der Entlüftungssenke 35 nahe liegende Magnetventil geschlossen wird, um die zu große Druckdifferenz zwischen der Arbeitskammer 5 und der Rückstellkammer 21 zu dämpfen. Während das der Kopplungsleitung 11 nahe liegende Magnetventil 43a geöffnet ist, baut sich gegenläufig zum Druckabbau in der Arbeitskammer 5 ein Gegendruck in der Rückstellkammer 21 auf, der den Trennkolben 23 abbremst und ein Überschwingen des Trennkolbens 23 vermeidet. Ist die Überschwinggefahr gebannt, kann das Magnetventil 43a wieder geschlossen werden, um die gewünschte Soll-Druckdifferenz zwischen der Arbeitskammer 5 und der Rückstellkammer 21 zu etablieren.

Sollte es zu einer erhöhten Haftreibung beim Entlüftungsvorgang des pneumatischen Stellantriebs 1 kommen, bei der der Stellkolben 23 nicht unter Federkraft in die gewünschte Notposition verfährt, kann beim Entlüftungsvorgang zuerst das der Entlüftungssenke naheliegende Magnetventil 43b geschlossen werden, während gleichzeitig das der Kopplungsleitung 11 naheliegende Magnetventil 43a geöffnet wird, um einen Druckausgleich und damit einen Druckabbau des Überdruck P1 in der Arbeitskammer 5 und einen entsprechend gegenläufigen Druckaufbau in der Rückstellkammer 21 zu erreichen, wodurch ein verstärkter Impuls zur Verlagerung des Stellkolbens 23 in die Notposition erreicht wird.

Die in Figur 2 dargestellte Ausführung betrifft einen pneumatisch doppelt-wirkenden Stellantrieb, bei dem der Stellungsregler 7 sowohl ein pneumatisches Stellsignal an die Hauptarbeitskammer als auch an die Rückstellkammer überträgt. Insbesondere verhalten sich die pneumatischen Stellsignale reziprok. Zur einfachen Lesbarkeit der Figurenbeschreibung werden ähnliche oder identische Bestandteile des Stellantriebs gemäß Figur 2 mit den gleichen Bezugsziffern wie bei dem in Figur 1 versehen, die aber um 100 erhöht sind.

Der Aufbau des Leitungssystems 109 unterscheidet sich von dem Leitungssystem 9 gemäß Figur 1 dadurch, dass neben der Kopplungsleitung 111 eine weitere Kopplungsleitung 161 vorgesehen ist, welche eine direkte Verbindung zwischen dem Stellungsregler 107 und der Rückstellkammer 121 des doppelt-wirkenden Stellantriebs 101 herstellt. Beide Kopplungsleitungen 111, 161 sind über eine Kurzschlussleitung 153 miteinander verbunden, in der ein Magnetventil 143 angeordnet ist, das über eine elektrische Leitung 145 von dem Stellungsregler 107 angesteuert werden kann.

Dabei ist es möglich, die Rückstellkammer 121 mit einem Stelldruck p2 zu beaufschlagen. Je nachdem, wie die internen Magnetventile (nicht dargestellt) des Stellungsreglers 107 gestellt ist, kann die Rückstellkammer 121 mit der Entlüftungssenke 135 verbunden sein und somit entlüftet sein.

Sollte es zu dem oben beschriebenen Stick-Slip-Effekt kommen, so steuert der Stellungsregler 107 das Ausgleichsventil 143 derart an, dass die Kurzschlussleitung 153 zwischen den Kopplungsleitungen 111, 161 geöffnet wird, so dass eine unmittelbare pneumatische Kopplung der Arbeitskammer 105 und der Rückstellkammer 121 einhergeht. Auf diese Weise wird der Stellkolben 123 gebremst, und ein Überschwingen der Trennwand nach einem Stick-Slip-Effekt ist verhindert.

Sollte es zu einem Stick-Slip-Effekt auch bei Entlüften des Stellantriebs 103 kommen, so kann auch in diesem Fall das Magnetventil 143 geöffnet werden, um einen unmittelbaren Druckabbau in der Arbeitskammer 105 zu bewirken.

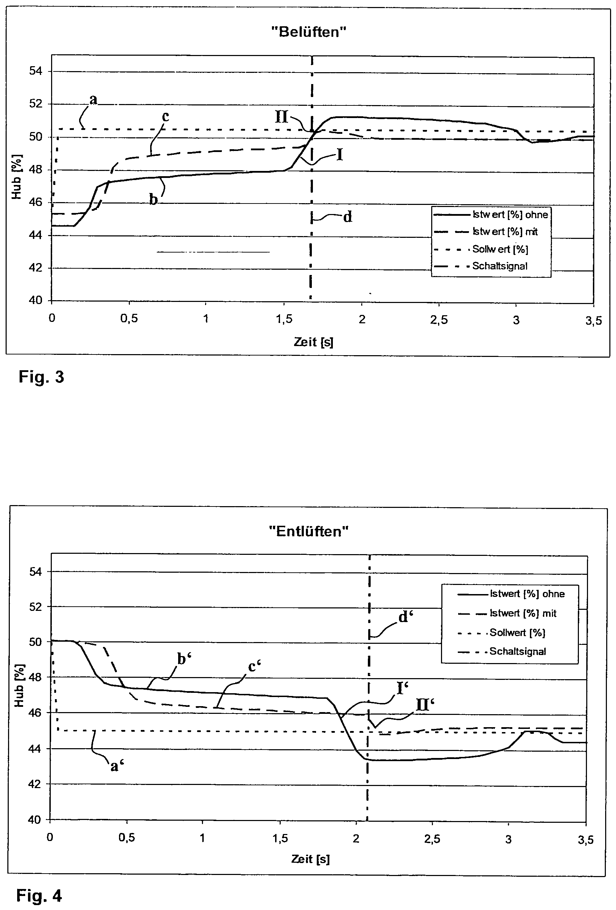

In dem Diagramm gemäß Figur 3 ist der Verlauf der Stellarmatur beim Belüften des pneumatischen Stellantriebs mit einer Kurzschlussleitung mit einem Ausgleichsventil (43a, 43b, 143) dargestellt. Die punktierte Linie a bei 50,5% stellt eine Sollpositionskurve dar. Zum Zeitpunkt "0 Sekunden" soll die Hub-Position 50,5 % eingenommen werden und während der gesamten Überprüfungszeit bis "3,5 Sekunden" eingehalten werden. Die durchgezogene Linie b stellt die Ist-Position ohne den erfindungsgemäßen Kurzschlussmechanismus im Zeitverlauf dar. Die gestrichelte Linie c stellt die Ist-Position eines Stellantriebs mit dem Kurzschlussmechanismus dar. Der Schaltzeitpunkt des Ausgleichsventils in der Kurzschlussleitung ist als punktstrichlierte Vertikallinie d bei 1,6 Sekunden dargestellt.

Bei einer optimalen Versuchsanordnung zur besten Vergleichbarkeit eines Stellantriebs mit Kurzschlussmechanismus und einem Stellantrieb ohne Kurzschlussmechanismus müssten beide Linien b und c bis zum Schaltzeitpunkt des Ausgleichsventils deckungsgleich liegen. Da allerdings in der Praxis aufgrund der sich ständig ändernden physikalischen Gegebenheiten kaum identisch wiederholbare Stellvorgänge möglich sind, kommt es zu dem leichten Versatz zwischen den Kennlinien b und c. Allerdings ist aus dem sehr ähnlichen Verlauf vor und dem unterschiedlichen Verhalten nach dem Schaltzeitpunkt deutlich die erfindungsgemäße Wirkung ersichtlich.

Die durchgezogene Kurve b des Stellantriebs ohne Kurzschlussmechanismus zeigt, wie der Stellantrieb seine Position verändert, bis der Hub bei 47% über einen Zeitraum von mehr als einer Sekunde nahezu stagniert. Da die Sollposition noch nicht eingenommen ist, wird durch den Stellungsregler während dieser Zeit in der Arbeitskammer des Stellantriebs der Stelldruck kontinuierlich erhöht. Nach 1,5 Sekunden ist der aufgebaute Druck derart hoch, dass der dem Stellantrieb entgegenstehende mechanische Widerstand schlagartig überwunden wird, was sich an dem steilen Anstieg I zwischen 1,5 und 2 Sekunden der Positionskurve b ablesen lässt. Ein derartiger Kurvenverlauf b ist typisch für das Auftreten des vorher beschriebenen Stick-Slip-Effektes bei herkömmlichen Stellantrieben. Durch den Überdruck in der Antriebskammer wird nach der Überwindung des Widerstands der Sollwert weit überschritten (um mehr als 1 %) und es kommt zu einem unkontrollierten Hubsprung von mehr als 3 %. Aufgrund der Trägheit des Stellungsregelungssystems dauert es über eine Sekunde, bis durch eine aufwendige Gegenregelung die Istwertposition angepasst und schließlich der Sollwert erst nach einer Gesamtstellzeit von 3,5 Sekunden erreicht wird.

Die gestrichelte Positionskurve c eines Stellantriebs mit Kurzschlussmechanismus verläuft, wie oben ausgeführt, in den ersten 1,5 Sekunden sehr ähnlich der Positionskurve b des Stellantriebs ohne Kurzschlussmechanismus. Wird nach 1,6 Sekunden der mechanische Widerstand aufgrund des in der Arbeitskammer aufgebauten Drucks überwunden, schnellt der Stellkolben hin zur Sollposition, was zu einem Abfall des in der Antriebskammer aufgebauten Überdruckes führt. Das Schnellen des Stellkolbens wird durch einen Positionssensor erfasst, und der Druckabfall kann durch einen Drucksensor sensiert werden, und diese Informationen werden an den Stellungsregler weitergegeben, der daraufhin durch Schalten des Ausgleichsventils die Hauptarbeitskammer und die Rückstellkammer kurzschließt. Der in dem Moment der ersten schnellen Bewegung des Stellkolbens durch den Kurzschluss ausgelöste Druckabbau in der Hauptarbeitskammer lässt den Arbeitsdruck in der Hauptarbeitkammer absinken, und gleichzeitig den Druck in der Rückstellkammer entsprechend gegenläufig ansteigen. Durch diesen herbeigeführten Druckausgleich in den Kammern wird der zu stark beschleunigte Stellkolben abgebremst, so dass der Positions-Istwert den Positionssollwert nach einer Gesamtstellzeit von nur 2 Sekunden erreicht, ohne dabei diesen zu überschreiten. Wie in Figur 3 bei Vergleich der Kurven b und c ersichtlicht ist, ist der Hubsprung aufgrund des Stick-Slip-Effekts bei dem pneumatischen Stellantrieb mit Kurzschlussmechanismus bei etwa nur 1% deutlich geringer, weswegen es zu keinem Überschwingen des Sollwerts a kommt. Der erfindungsgemäße Vorteil der Abflachung oder Begradigung des Hub- /Zeitverlaufs kann auch beim Entlüften des pneumatischen Stellantriebs bei Betrachtung von Figur 4 analysiert werden. Es ist ersichtlich, dass die erfindungsgemäße Kurzschlussbildung zwischen der Arbeitskammer und der Rückstellkammer dazu führt, dass der Sollwert nicht übersprungen wird, was noch bei einem klassischen bekannten Stellventil der Fall gewesen wäre.

Wegen der sich nicht verändernden Hubposition, welche durch einen Positionssensor detektiert wird, lässt der Stellungsregler den pneumatischen Stelldruck in der Rückstellkammer weiter ansteigen, um den gewünschten Sollwert (a') zu erreichen. Die punktierte Linie a' bei 45% stellt den Hubpositionssollwert dar. Die durchgezogene Linie b' stellt die Hubposition eines Stellantriebs ohne Kurzschlussmechanik im Zeitverlauf dar. Die strichlierte Linie c' stellt die Hubposition eines Stellantriebs mit Kurzschlussmechanik im Zeitverlauf dar. Die strichpunktierte Linie d' bei 2,1 Sekunden zeigt den Schaltzeitpunkt des Ausgleichsventils.

Die Istpositionskurve b' des Stellantriebs ohne Kurzschlussmechanik lässt erkennen, dass, nachdem sich die Position des Stellantriebs zunächst in Richtung des Sollwerts verändert, die Position nachfolgend über einen Zeitraum von über eine Sekunde (von etwa 0,5 Sekunden bis 2 Sekunden) aufgrund eines die Bewegung des Stellantriebs hemmenden Widerstands nahezu unverändert bleibt. Ist ein zum Überwinden des Widerstands ausreichend hoher Druck in der Rückstellkammer erreicht, ändert sich die Hubposition des Stellantriebs ohne Kurzschlussmechanismus schlagartig (bei I'), und der Sollwert wird zunächst wegen des Überdrucks in der Rückstellkammer deutlich unterschritten, um erst im Verlauf der nächsten eineinhalb Sekunden durch eine aufwendige Nachregelung den Sollwert (a') zu erreichen. Wie in Figur 4 ersichtlich ist, unterschwingt die Stellarmatur den Sollpositionswert (a') um etwa 3%.

Demgegenüber zeigt die gestrichelte Linie gemäß dem Stellantrieb mit Kurzschlussmechanismus nahezu kein Unterschreiten des Positionssollwerts aber ein deutlich schnelles Erreichen des Positionssollwerts bereits nach 2,5 Sekunden. Die Unterschwingamplitude II' ist deutlich kleiner als die des Stellantriebs ohne den Kurzschlussmechanismus bei I'. Die erfindungsgemäße Maßnahme des Bereitstellens eines pneumatischen Kurzschlusses bei einem Stick-Slip-Effekt begradigt den Hubzeitverlauf, wodurch eine genauere und schnellere Regelung der Position der Stellarmatur erreicht ist. Dies ist darauf zurückzuführen, dass der Stellungsregler den Druckabfall bei Überwindung des dem Stellantrieb entgegen gesetzten Widerstands feststellt und dementsprechend das Magnetventil betätigt, wodurch die Rückstellkammer und die Antriebskammer kurz geschlossen sind und damit ein Druckausgleich erfolgt. Gemäß den Figuren 3 und 4 ist die Beruhigungszeit des Regelsystems mit Kurzschlussmechanik gegenüber einem System ohne Kurzschlussmechanik um ein Vielfaches reduziert.

Um den Stick-Slip-Effekt zu erfassen, sind sowohl ein Drucksensor für die erste Arbeitskammer als auch ein Drucksensor für die Rückstellkammer vorgesehen.

Im Anschluss an die Aktivierung des pneumatischen Kurzschlusses des erfindungsgemäßen Stellantriebs ist folgendes zu beachten. Sollten insbesondere ständig wirkende Stellkräfte an der Stellarmatur und/oder an der Stellwand beispielsweise durch eine Rückstellfeder wirken, ist darauf zu achten, dass der pneumatische Kurzschluss nur kurzzeitig, vorzugsweise kürzer als 1 Sekunde, insbesondere kürzer als 0,5 Sekunden, insbesondere kürzer als 0,1 oder 0,2 Sekunden, aufrecht erhalten wird. Nach dem kurzzeitigen Aktivieren des pneumatischen Kurzschlusses ist dieser wieder zu deaktivieren, damit der für die Sollpositionseinnahme notwendige Druckunterschied in den Arbeitskammern wieder aufgebaut werden kann. Vorzugsweise ist die Zeitdauer zur Aufrechterhaltung des pneumatischen Kurzschlusses derart einzustellen, dass der pneumatische Kurzschluss auf jeden Fall wieder deaktiviert wird, bevor die Stellarmatur in eine Stillstandsposition gelangt, also während einer dynamischen Stellbewegung.

Mit Deaktivierung des pneumatischen Kurzschlusses beispielsweise bei weniger als 1 Sekunde, wird der Stellungsregler das Solldrucksignal an die Arbeitskammer oder die Arbeitskammern abgegeben, um den gewünschten Druckunterschied zum Positionieren der Stellarmatur aufzubauen.

### Bezugszeichenliste

- 1: pneumatischer Stellantrieb
- 3, 103: Antriebsgehäuse
- 5, 105: Arbeitskammer
- 7, 107: Stellungsregler
- 9, 109: Leitungssystem
- 11, 111, 161: pneumatische Kopplungsleitung
- 13, 113: Stellarmatur
- 15, 115: Drehrichtung Antrieb
- 17: Schraubendruckfeder
- 21, 121: Rückstellkammer
- 23, 123: Stellkolben
- 25, 125: Bewegungsrichtung Kolben
- 27, 127: Druckquelle
- 31, 131: Eingangsleitung
- 33, 133: Steuerausgang
- 35, 135: Entlüftungssenke
- 37, 137, 39: Leitungsabzweigung
- 41: Abluftleitung
- 43a, 43b, 143: Magnetventil
- 45a, 45b, 145: elektronische Leitung
- 51, 151: Drucksensor
- 153: Kurzschlussleitung
- p1, p2: Stelldruck

## Patentansprüche

1. Pneumatischer Antrieb (1, 101) zum Stellen einer Stellarmatur (13, 113), insbesondere eines Stellventils, mit einer ersten Arbeitskammer (5, 105), einer zweiten Arbeitskammer, insbesondere einer Rückstellkammer (21, 121), wobei beide Kammern (5, 21, 105, 121) durch eine bewegliche Trennwand (23, 123) voneinander pneumatisch getrennt sind, an der die Stellarmatur (13, 113) stellkraftübertragend gekoppelt ist, und bei einer Druckdifferenz zwischen den Arbeitskammern (5, 21, 105, 121) die Trennwand (23, 123) in einer ersten Stellrichtung verlagert wird, und mit einem Stellungsregler (7, 107), der zum Aufbau der Druckdifferenz wenigstens ein pneumatisches Stellsignal an die erste Arbeitskammer (5, 105) und gegebenenfalls an die zweite Arbeitskammer (21, 121) abgeben kann, wobei die erste und zweite Arbeitskammer (5, 21, 105, 121) durch eine pneumatische Kurzschlussleitung miteinander pneumatisch verbunden sind und in der Kurzschlussleitung ein Ausgleichsventil zum Schließen und/oder Öffnen der Kurzschlussleitung angeordnet ist, **dadurch gekennzeichnet, dass** der Antrieb einen Positionssensor zum Erfassen einer sprunghaften Fahrbewegung der Stellarmatur umfasst und/oder in wenigstens einer Arbeitskammer (5, 21, 105, 121) ein Drucksensor vorgesehen ist, der mit dem Stellungsregler (7, 107) signalübertragungsgemäß verbunden ist, wobei das Ausgleichsventil derart durch den entsprechend ausgebildeten Stellungsregler (7, 107) angesteuert ist, dass im Falle eines Stick-Slip-Zustands der Stellarmatur (13, 113) das Ausgleichsventil die erste und zweite Arbeitskammer (5, 21, 105, 121) für einen Kammer-Druckausgleich pneumatisch kurzschließt.

2. Pneumatischer Antrieb (1, 101) zum Stellen einer Stellarmatur (13, 113), insbesondere eines Stellventils, mit einer ersten Arbeitskammer (5, 105), einer zweiten Arbeitskammer, insbesondere einer Rückstellkammer (21, 121), wobei beide Kammern (5, 21, 105, 121) durch eine bewegliche Trennwand (23, 123) voneinander pneumatisch getrennt sind, an der die Stellarmatur (13, 113) stellkraftübertragend gekoppelt ist, und bei einer Druckdifferenz zwischen den Arbeitskammern (5, 21, 105, 121) die Trennwand (23, 123) in einer ersten Stellrichtung verlagert wird, und mit einem Stellungsregler (7, 107), der zum Aufbau der Druckdifferenz wenigstens ein pneumatisches Stellsignal an die erste Arbeitskammer (5, 105) und gegebenenfalls an die zweite Arbeitskammer (21, 121) abgeben kann, wobei die erste und zweite Arbeitskammer (5, 21, 105, 121) durch eine pneumatische Kurzschlussleitung miteinander pneumatisch verbunden sind und in der Kurzschlussleitung ein Ausgleichsventil zum Schließen und/oder Öffnen der Kurzschlussleitung angeordnet ist, dadurch **gekennzeichn et**, dass in wenigstens einer Arbeitskammer (5, 21, 105, 121) ein Drucksensor vorgesehen ist, der mit dem Stellungsregler (7, 107) signalübertragungsgemäß verbunden ist, wobei das Ausgleichsventil derart durch den entsprechend ausgebildeten Stellungsregler (7, 107) angesteuert ist, dass im Falle einer Überschreitung einer vorbestimmten pneumatischen Ist-Druckdifferenz zwischen der ersten und zweiten Arbeitskammer (5, 21, 105, 121) das Ausgleichsventil die erste und zweite Arbeitskammer (5, 21, 105, 121) für einen Kammer-Druckausgleich pneumatisch kurzschließt.

3. Pneumatischer Antrieb (1) nach Anspruch 1 oder 2, **dadurch gekennzeichnet, dass** das Ausgleichsventil durch ein 2/2-Wegeventil und/oder durch wenigstens ein Magnetventil (43a, 43b, 143) gebildet ist.

4. Pneumatischer Antrieb (1) nach einem der vorstehenden Ansprüche, dadurch **geken nzeichnet**, dass die zweite Arbeitskammer (121) ebenfalls mit einem pneumatischen Stellsignal von dem Stellungsregler (107) beaufschlagbar ist, wobei das Ausgleichsventil in einem zusätzlichen Kurzschlussleitungsabschnitt (153) angeordnet ist, um zwei pneumatische Kopplungsleitungen (111, 161), die den Stellungsregler (107) pneumatisch mit der jeweiligen Kammer (105, 121) zur Übertragung des jeweiligen pneumatischen Stellsignals verbinden, kurzzuschließen.

5. Pneumatischer Antrieb (1) nach einem der vorstehenden Ansprüche, **dadurch gekennzeichnet, dass** eine pneumatische Abluftleitung (41) von der zweiten Arbeitskammer (21) in eine atmosphärenseitige Entlüftungssenke (35) vorgesehen ist, wobei in der Abluftleitung ein Schaltventil (43b) angeordnet ist, um im geöffneten Zustand die zweite Arbeitskammer (21) mit Atmosphärendruck zu verbinden, und dass zum Druckausgleich das Schaltventil (43b) durch den Stellungsregler (7) betätigt wird, um die Abluftverbindung zwischen der zweiten Arbeitskammer und Atmosphärendruck zu schließen.

6. Pneumatischer Antrieb (1) nach einem der vorstehenden Ansprüche, **dadurch gekennzeichnet, dass** das Ausgleichsventil durch zwei Magnetventile (43a, 43b) gebildet ist, die in Reihe hintereinander zum Schließen und Öffnen einer eine pneumatische Entlüftungssenke (35) mit einer Kopplungsleitung, die den Stellungsregler (7) mit der ersten Arbeitskammer (5) pneumatisch verbindet, pneumatisch verbindenden Abluftleitung (41) angeordnet sind, in der zwischen den Magnetventilen (43a, 43b) eine pneumatische Abzweigung in die zweite Arbeitskammer (21) vorgesehen ist.

7. Pneumatischer Antrieb (1) nach Anspruch 6, **dadurch gekennzeichnet, dass** im Betrieb zum Druckausgleich das der Entlüftungssenke (35) nahe liegende Magnetventil (43b) durch den Stellungsregler (7) geschlossen ist und das der Kopplungsleitung nahe liegende Magnetventil (43a) durch den Stellungsregler (7) geöffnet ist und/oder dass für einen Normalbetrieb des Antriebs ohne Druckausgleich das der Entlüftungssenke (35) nahe liegende Magnetventil (43b) durch den Stellungsregler (7) geöffnet ist und das der Kopplungsleitung nahe liegende Magnetventil (43a) durch den Stellungsregler (7) geschlossen ist.

8. Pneumatischer Antrieb (1) nach einem der vorstehenden Ansprüche, **dadurch gekennzeichnet, dass** die Arbeitskammern (5, 21, 105, 121) von einem zylindrischen Außengehäuse begrenzt sind und/oder die Trennwand (23, 123) durch einen fluiddicht an einer Innenseite des Außengehäuses beweglich gelagerten Kolben, insbesondere eine Membran-Platten-Struktur, gebildet ist und/oder dass in der insbesondere auf Atmosphärendruck schaltbaren Rückstellkammer (21) eine Rückstellfeder angeordnet ist, die zum Verlagern der Trennwand (23) in einer zur ersten Stellrichtung entgegen gesetzten Rückstellrichtung ausgelegt ist.

9. Pneumatischer Antrieb (1) nach einem der vorstehenden Ansprüche, **dadurch gekennzeichnet, dass** im Betrieb eine zeitliche Dauer der pneumatischen Kurzschließung der ersten und zweiten Arbeitskammer kleiner als 1,0 Sekunden, 0,5 Sekunden, 0,2 oder 0,1 Sekunden ist.

10. Verfahren zum Betreiben eines pneumatischen Antriebs (1, 100) zum Stellen eines Stellventils mit einer ersten Arbeitskammer (5, 105) und einer zweiten Arbeitskammer (21, 121), wobei die Arbeitskammern (5, 21, 105, 121) pneumatisch beaufschlagt werden und zum Aufbau einer Druckdifferenz in den Arbeitskammern wenigstens ein pneumatisches Stellsignal an die erste Arbeitskammer (5, 105) und gegebenenfalls an die zweite Arbeitskammer (21, 121) abgegeben wird, um die Stellarmatur (13, 113) in einer Stellrichtung zu verlagern, wobei die erste (5, 105) und zweite (21, 121) Arbeitskammer durch eine Kurzschlussleitung mit einem darin angeordneten Ausgleichsventil miteinander pneumatisch verbunden werden , dadurch **gekennzeic hnet**, dass im Falle eines Stick-Slip-Zustands der Stellarmatur (13, 113), der durch Erfassung einer sprunghaften Fahrbewegung der Stellarmatur und/oder durch Ermittlung einer unzulässigen Druckspitze in einer Arbeitskammern und/oder durch Erfassung eines Abfalls eines in einer der Antriebskammern aufgebauten Überdruckes detektiert wird, die erste (5, 105) und zweite (21, 121) Arbeitskammer durch Öffnen des Ausgleichsventils pneumatisch kurzgeschlossen werden, um ein Überschwingen der Stellarmatur in Folge eines Stick-Slip-Effekts zu kompensieren oder zu vermeiden.

11. Verfahren zum Betreiben eines pneumatischen Antriebs (1, 100) zum Stellen eines Stellventils mit einer ersten Arbeitskammer (5, 105) und einer zweiten Arbeitskammer (21, 121), wobei die Arbeitskammern (5, 21, 105, 121) pneumatisch beaufschlagt werden und zum Aufbau einer Druckdifferenz in den Arbeitskammern wenigstens ein pneumatisches Stellsignal an die erste Arbeitskammer (5, 105) und gegebenenfalls an die zweite Arbeitskammer (21, 121) abgegeben wird, um die Stellarmatur (13, 113) in einer Stellrichtung zu verlagern, wobei die erste (5, 105) und zweite (21, 121) Arbeitskammer durch eine Kurzschlussleitung mit einem darin angeordneten Ausgleichsventil miteinander pneumatisch verbunden werden , dadurch **gekennzeic hnet** , dass im Falle einer Überschreitung eines vorbestimmten pneumatischen Ist-Druckunterschieds zwischen der ersten (5, 105) und zweiten (21, 121) Arbeitskammer, die erste (5, 105) und zweite (21, 121) Arbeitskammer durch Öffnen des Ausgleichsventils pneumatisch kurzgeschlossen werden, um ein Überschwingen der Stellarmatur zu vermeiden.

## Claims

1. Pneumatic actuator (1, 101) for setting a control armature (13, 113), in particular a control valve, having a first working chamber (5, 105), a second working chamber, in particular a return chamber (21, 121), wherein both chambers (5, 21, 105, 121) are pneumatically separated from each other by a movable dividing wall (23, 123) to which the control armature (13, 113) is coupled in a force-transmitting manner and which, in case of a pressure difference between the working chambers (5, 21, 105, 121), is displaced in a first control direction, and having a positioner (7, 107) which can, for building up the pressure difference, output at least one pneumatic control signal to the first working chamber (5, 105) and, if applicable, to the second working chamber (21, 121), wherein the first and the second working chambers (5, 21, 105, 121) are pneumatically connected to each other via a pneumatic short-circuit duct and that a balancing valve is disposed in the short-circuit duct for closing and/or opening the short-circuit duct, **characterised in that**
the actuator comprises a position sensor for detecting an erratic movement of the control armature and/or that a pressure sensor is provided in at least one working chamber (5, 21, 105, 121) which pressure sensor is connected in a signal transmitting manner to the positioner (7, 107), wherein the balancing valve is driven by the respectively designed positioner (7, 107) in such a way that in case of a stick-slip state of the control armature (13, 113), the balancing valve pneumatically shortcircuits the first and the second working chamber (5, 21, 105, 121) for achieving a pressure balance between the chambers.

2. Pneumatic actuator (1, 101) for setting a control armature (13, 113), in particular a control valve, having a first working chamber (5, 105), a second working chamber, in particular a return chamber (21, 121), wherein both chambers (5, 21, 105, 121) are pneumatically separated from each other by a movable dividing wall (23, 123) to which the control armature (13, 113) is coupled in a force-transmitting manner and which, in case of a pressure difference between the working chambers (5, 21, 105, 121), is displaced in a first control direction, and having a positioner (7, 107) which can, for building up the pressure difference, output at least one pneumatic control signal to the first working chamber (5, 105) and, if applicable, to the second working chamber (21, 121), wherein the first and the second working chambers (5, 21, 105, 121) are pneumatically connected to each other via a pneumatic short-circuit duct and that a balancing valve is disposed in the short-circuit duct for closing and/or opening the short-circuit duct, **characterised in that**
a pressure sensor is provided in at least one working chamber (5, 21, 105, 121) which pressure sensor is connected in a signal transmitting manner to the positioner (7, 107), wherein the balancing valve is driven by the respectively designed positioner (7, 107) in such a way that in case of an exceedance of a predetermined pneumatic actual pressure difference between the first and the second working chamber (5, 21, 105, 121), the balancing valve pneumatically shortcircuits the first and the second working chamber (5, 21, 105, 121) for achieving a pressure balance between the chambers.

3. Pneumatic actuator (1) according to claim 1 or 2, **characterised in that** the balancing valve is constituted by a 2-port/2-way valve and/or by at least one magnetic valve (43a, 43b, 143).

4. Pneumatic actuator (1) according to one of the preceding claims, **characterised in that** the second working chamber (121) can also be impinged by a pneumatic control signal from the positioner (107), wherein the balancing valve is disposed in an additional short-circuit duct-section (153) in order to shortcircuit two pneumatic coupling ducts (111, 161) that pneumatically connect the positioner (107) to the respective chamber (105, 121) for transmission of the respective pneumatic control signal.

5. Pneumatic actuator (1) according to one of the preceding claims, **characterised in that** a pneumatic venting duct (41) is provided from the second working chamber (21) to an atmosphere-side venting sink (35), wherein a switchable valve (43b) is disposed in the venting duct in order to connect the second working chamber to atmospheric pressure in the open state, and that the switchable valve (43b) is actuated by the positioner (7) in order to close the venting connection between the second working chamber and atmospheric pressure for pressure balancing.

6. Pneumatic actuator (1) according to one of the preceding claims, **characterised in that** the balancing valve is constituted by two magnetic valves (43a, 43b) arranged in line behind each other in order to close and to vent a pneumatic venting duct (41) that pneumatically connects a pneumatic venting sink (35) to a coupling duct pneumatically connecting the positioner (7) to the first working chamber (5), wherein a pneumatic branch connection to the second working chamber (21) is provided in the venting duct between the two magnetic valves (43a, 43b).

7. Pneumatic actuator (1) according to claim 6, **characterised in that**, during operation, for pressure balancing the magnetic valve (43b) adjacent to the venting sink (35) is closed by the positioner (7) and the magnetic valve (43a) adjacent to the coupling duct is opened by the positioner (7) and/or that for a normal operation of the actuator without pressure balancing the magnetic valve (43b) adjacent to the venting sink (35) is opened by the positioner (7) and the magnetic valve (43a) adjacent to the coupling duct is closed by the positioner (7).

8. Pneumatic actuator (1) according to one of the preceding claims, **characterised in that** the working chambers (5, 21, 105, 121) are delimited by a cylindrical external housing, and/or that the dividing wall (23, 123) is formed by a piston movably and fluid-tightly mounted at the inside of the outer housing, in particular by a membrane-plate structure, and/or that in the return chamber (21, 121), which is exposable in particular to atmospheric pressure, a return spring is disposed, adapted for displacing the dividing wall (23) into a return direction opposite to the first control direction.

9. Pneumatic actuator (1) according to one of the preceding claims, **characterised in that**, during operation, a duration of the pneumatic shortcircuiting of the first and the second working chambers is shorter than 1.0 seconds, 0.5 seconds, 0.2 seconds, or 0.1 seconds.

10. Method for operating a pneumatic actuator (1, 100) for actuating a control valve having a first working chamber (5, 105) and a second working chamber, wherein the working chambers (5, 21, 105, 121) are pneumatically impinged, and wherein for building up a pressure difference in the working chambers, at least one pneumatic control signal is output to the first working chamber and, if applicable, to the second working chamber to displace the control armature (13, 113) into a control direction, wherein the first (5, 105) and the second (21, 121) working chamber are pneumatically connected to each other via a pneumatic short circuit duct having a balancing valve arranged inside, **characterised in that**
in case of a stick-slip state of the control armature (13, 113) that is detected via detecting an erratic movement of the control armature, and/or via determining an inadmissible pressure peak in a working chamber, and/or via detecting a drop of an excess pressure built up in one of the working chambers, the first and the second working chambers (5, 21, 105, 121) are pneumatically shortcircuited by opening the balancing valve in order to compensate or to avoid an overshooting of the control armature caused by a stick-slip-effect.

11. Method for operating a pneumatic actuator (1, 100) for actuating a control valve having a first working chamber (5, 105) and a second working chamber (21, 121), wherein the working chambers (5, 21, 105, 121) are pneumatically impinged, and wherein for building up a pressure difference in the working chambers, at least one pneumatic control signal is output to the first working chamber and, if applicable, to the second working chamber to displace the control armature (13, 113) into a control direction, wherein the first (5, 105) and the second (21, 121) working chamber are pneumatically connected to each other via a pneumatic short circuit duct having a balancing valve arranged inside, **characterised in that**
in case of an exceedance of a predetermined pneumatic actual pressure difference between the first and the second working chambers (5, 21, 105, 121), the first and the second working chambers (5, 21, 105, 121) are pneumatically shortcircuited by opening the balancing valve in order to compensate or to avoid an overshooting of the control armature caused by a stick-slip-effect.

## Revendications

1. Entraînement pneumatique (1, 101) pour régler un robinet de réglage (13, 113) en particulier d'une soupape de réglage, comprenant une première chambre de travail (5, 105), une seconde chambre de travail, en particulier une chambre de rappel (21, 121), dans lequel les deux chambres (5, 21, 105, 121) sont séparées de façon pneumatique l'une de l'autre par une cloison (23, 123) mobile sur laquelle le robinet de réglage (13, 113) est couplé en transmission de force de rappel, et en cas de différence de pression entre les chambres de travail (5, 21, 105, 121), la cloison (23, 123) est déplacée dans un premier sens de réglage, et comprenant un régleur de position (7, 107) qui peut envoyer au moins un signal de réglage pneumatique à la première chambre de travail (5, 105) et le cas échéant à la seconde chambre de réglage (21, 121), pour établir la différence de pression, dans lequel les première et seconde chambres de travail (5, 21, 105, 121) sont reliées entre elles de façon pneumatique par une ligne de court-circuit pneumatique, et une soupape égalisatrice pour fermer et/ou ouvrir la ligne de court-circuit est disposée dans la ligne de court-circuit, **caractérisé en ce que** l'entraînement comprend un capteur de position pour détecter un mouvement de marche par bonds du robinet de réglage et/ou un capteur de pression est prévu dans au moins une chambre de travail (5, 21, 105, 121), qui est relié au régleur de position (7, 107) en transmission de signal, dans lequel la soupape égalisatrice est ainsi pilotée par le régleur de position (7, 107) formé de manière correspondante qu'en cas d'un état de marche saccadée du robinet de réglage (13, 113), la soupape égalisatrice met en court-circuit pneumatique les première et seconde chambres de travail (5, 21, 105, 121) pour un équilibre de pression des chambres.

2. Entraînement pneumatique (1, 101) pour régler un robinet de réglage (13, 113) en particulier d'une soupape de réglage, comprenant une première chambre de travail (5, 105), une seconde chambre de travail, en particulier une chambre de rappel (21, 121), dans lequel les deux chambres (5, 21, 105, 121) sont séparées de façon pneumatique l'une de l'autre par une cloison (23, 123) mobile sur laquelle le robinet de réglage (13, 113) est couplé en transmission de force de rappel, et en cas de différence de pression entre les chambres de travail (5, 21, 105, 121), la cloison (23, 123) est déplacée dans un premier sens de réglage, et comprenant un régleur de position (7, 107) qui peut envoyer au moins un signal de réglage pneumatique à la première chambre de travail (5, 105) et le cas échéant à la seconde chambre de réglage (21, 121), pour établir la différence de pression, dans lequel les première et seconde chambres de travail (5, 21, 105, 121) sont reliées entre elles de façon pneumatique par une ligne de court-circuit pneumatique, et une soupape égalisatrice pour fermer et/ou ouvrir la ligne de court-circuit est disposée dans la ligne de court-circuit, **caractérisé en ce qu'**un capteur de pression est prévu dans au moins une chambre de travail (5, 21, 105, 121), qui est relié au régleur de position (7, 107) en transmission de signal, dans lequel la soupape égalisatrice est ainsi pilotée par le régleur de position (7, 107) formé de manière correspondante qu'en cas d'un dépassement d'une différence de pression réelle pneumatique prédéfinie entre les première et seconde chambres de travail (5, 21, 105, 121), la soupape égalisatrice met en court-circuit pneumatique les première et seconde chambres de travail (5, 21, 105, 121) pour un équilibre de pression des chambres.

3. Entraînement pneumatique (1) selon la revendication 1 ou 2, **caractérisé en ce que** la soupape égalisatrice est formée par une soupape 2/2 voies et/ou par au moins une électrovanne (43a, 43b, 143).

4. Entraînement pneumatique (1) selon l'une des revendications précédentes, **caractérisé en ce que** la seconde chambre de travail (121) peut également recevoir un signal de réglage pneumatique du régleur de position (107), dans lequel la soupape égalisatrice est disposée dans un tronçon supplémentaire (153) de ligne de court-circuit pour mettre en court-circuit deux lignes de couplage pneumatiques (111, 161) qui relient le régleur de position (107) de façon pneumatique avec la chambre (105, 121) respective pour transmettre le signal de réglage pneumatique respectif.

5. Entraînement pneumatique (1) selon l'une des revendications précédentes, **caractérisé en ce qu'**une ligne d'air sortant (41) pneumatique est prévue de la seconde chambre de travail (21) dans un puits d'évacuation d'air (35) côté atmosphère, dans lequel un relais pneumatique (43b) est disposé dans la ligne d'air sortant pour, dans l'état ouvert, relier la seconde chambre de travail (21) à la pression atmosphérique, et que pour l'équilibre de pression, le relais pneumatique (43b) est actionné par le régleur de position (7) pour fermer la liaison d'air sortant entre la seconde chambre de travail et la pression atmosphérique.

6. Entraînement pneumatique (1) selon l'une des revendications précédentes, **caractérisé en ce que** la soupape égalisatrice est formée par deux électrovannes (43a, 43b) qui sont disposées en rangée l'une derrière l'autre pour fermer et ouvrir une ligne d'air sortant (41) reliant de façon pneumatique un puits d'évacuation d'air (35) pneumatique à une ligne de couplage qui relie de façon pneumatique le régleur de position (7) à la première chambre de travail (5), dans laquelle une dérivation pneumatique dans la seconde chambre de travail (21) est prévue entre les électrovannes (43a, 43b).

7. Entraînement pneumatique (1) selon la revendication 6, **caractérisé en ce qu'**en fonctionnement, pour équilibrer la pression, l'électrovanne (43b) proche du puits d'évacuation d'air (35) est fermée par le régleur de position (7) et l'électrovanne (43a) proche de la ligne de couplage est ouverte par le régleur de position (7) et/ou que pour un fonctionnement normal de l'entraînement sans équilibre de pression, l'électrovanne (43b) proche du puits d'évacuation d'air (35) est ouverte par le régleur de position (7) et l'électrovanne (43a) proche de la ligne de couplage est fermée par le régleur de position (7).

8. Entraînement pneumatique (1) selon l'une des revendications précédentes, **caractérisé en ce que** les chambres de travail (5, 21, 105, 121) sont délimitées par un boîtier extérieur cylindrique et/ou la cloison (13, 123) est formée par un piston disposé mobile en étanchéité fluidique sur un côté intérieur du boîtier extérieur, en particulier une structure membrane-plaques, et/ou que dans la chambre de rappel (21) pouvant être branchée en particulier à la pression atmosphérique, un ressort de rappel est disposé qui est conçu pour déplacer la cloison (23) dans un sens de rappel opposé au premier sens de réglage.

9. Entraînement pneumatique (1) selon l'une des revendications précédentes, **caractérisé en ce qu'**en fonctionnement, une durée du court-circuit pneumatique des première et seconde chambres de travail est inférieure à 1,0 seconde, 0,5 seconde, 0,2 seconde ou 0,1 seconde.

10. Procédé destiné au fonctionnement d'un entraînement pneumatique (1, 100) pour régler une soupape de réglage, comprenant une première chambre de travail (5, 105) et une seconde chambre de travail (21, 121), dans lequel les chambres (5, 21, 105, 121) sont alimentées de façon pneumatique et pour établir une différence de pression dans les chambres de travail, au moins un signal de réglage pneumatique est envoyé à la première chambre de travail (5, 105) et le cas échéant à la seconde chambre de travail (21, 121), pour déplacer le robinet de réglage (13, 113) dans un sens de réglage, dans lequel la première (5, 105) et la seconde (21, 121) chambres de réglage sont reliées entre elles de façon pneumatique par une ligne de court-circuit avec une soupape égalisatrice disposée dedans, **caractérisé en ce qu'**en cas d'un état de marche saccadée du robinet de réglage (13, 113) qui est détecté par détection d'un mouvement de marche par bonds du robinet de réglage et/ou par détection d'une pointe de pression non autorisée dans une chambre de travail et/ou par détection d'une chute d'une sur-pression établie dans l'une des chambres de pression, les première (5, 105) et seconde (21, 121) chambres de travail sont mises en court-circuit pneumatique par l'ouverture de la soupape égalisatrice pour compenser ou éviter une suroscillation du robinet de réglage à la suite d'un effet de marche saccadée.

11. Procédé destiné au fonctionnement d'un entraînement pneumatique (1, 100) pour régler une soupape de réglage, comprenant une première chambre de travail (5, 105) et une seconde chambre de travail (21, 121), dans lequel les chambres (5, 21, 105, 121), sont alimentées de façon pneumatique et pour établir une différence de pression dans les chambres de travail, au moins un signal de réglage pneumatique est envoyé à la première chambre de travail (5, 105) et le cas échéant à la seconde chambre de travail (21, 121), pour déplacer le robinet de réglage (13, 113) dans un sens de réglage, dans lequel la première (5, 105) et la seconde (21, 121) chambres de réglage sont reliées entre elles de façon pneumatique par une ligne de court-circuit avec une soupape égalisatrice disposée dedans, **caractérisé en ce qu'**en cas d'un dépassement d'une différence de pression réelle pneumatique prédéfinie entre les première (5, 105) et seconde (21, 121) chambres de travail, les première (5, 105) et seconde (21, 121) chambres de travail sont mises en court-circuit pneumatique par l'ouverture de la soupape égalisatrice pour éviter une suroscillation du robinet de réglage.
